Europäisches Patentamt

European Patent Office

Office européen des brevets

(19)

(11) Publication number: **0 104 773**
**B1**

(12) **EUROPEAN PATENT SPECIFICATION**

(45) Date of publication of patent specification: **25.01.89**

(51) Int. Cl.⁴: **B 09 B 3/00, C 02 F 11/00**

(21) Application number: **83304943.0**

(22) Date of filing: **26.08.83**

(54) **Apparatus and method for treating liquid and semi-solid organic waste materials.**

(30) Priority: **30.08.82 US 413020**
**30.08.82 US 413025**

(43) Date of publication of application:
**04.04.84 Bulletin 84/14**

(45) Publication of the grant of the patent:
**25.01.89 Bulletin 89/04**

(84) Designated Contracting States:
**BE DE FR GB IT NL**

(56) References cited:
**AU-B- 487 701**
**DE-B-1 132 043**
**DE-C- 29 394**
**FR-A-2 272 044**
**US-A-3 316 843**
**US-A-4 145 008**
**US-A-4 190 372**

(73) Proprietor: **CHEMFIX TECHNOLOGIES, INC.**
**1675 Airline Highway P.O. Box 1572**
**Kenner, LA 70063 (US)**

(72) Inventor: **Donaldson, David L.**
**3700 Rue Denise**
**New Orleans Louisiana 70114 (US)**
Inventor: **Redelman, Randall N.**
**612 Ironwood Drive**
**Plainfield Indiana 46168 (US)**

(74) Representative: **Warren, Anthony Robert et al**
**BARON & WARREN 18 South End Kensington**
**London W8 5BU (GB)**

Courier Press, Leamington Spa, England.

## Description

The present invention relates to an apparatus and method for treating liquid and semi-solid organic waste materials prior to final disposal, whereby the wastes are made suitable for disposition in a landfill or the like.

Disposal of organic waste materials resulting particularly from sewage, but also from garbage, certain industrial wastes, and the like, has long been a significant problem. Numerous techniques for handling the wastes have been developed, typically involving placing the wastes in landfills. Such landfills have, however, resulted in pollution and health problems, as well as making the land so used unfit for other purposes. Many of the waste materials are physically or chemically unstable, and thus decompose under the influence of natural factors, with release of objectionable odors, and toxic or biologically harmful products which can enter into the contiguous water table. Moreover, experience has shown that even with the best landfill techniques there can also result insect, rodent and disease problems, and the potential for air pollution through refuse fires. Inevitable decomposition of non-permanent materials results in reduction of the volume of the material used as landfill with resultant subsidence of the filled land.

Thus, a waste treatment process is needed that renders the wastes non-polluting, solid, substantially insoluble in water, and chemically and physically stable. Such a process that meets these requirements is disclosed in U.S. Patent No. 3,837,872, issued September 24, 1974. The waste is mixed with an alkali metal silicate in the presence of a setting agent. The silicate and setting agent are used in proportions which cause the mixture to undergo consolidation and solidification and form a solid mass which is then used as the landfill material.

Of course, suitable apparatus for carrying out this process is required, including a means for mixing the waste with the silicate and setting agent.

One such apparatus is shown in U.S. Patent No. 3,893,656, issued July 8, 1975. A mobile unit is disclosed for treating liquid waste such as is stored or deposited within a pond or lagoon. The apparatus, which is mounted on the bed of a trailer, includes a storage bin for holding a quantity of the setting agent and a hopper into which the liquid waste is pumped for combination with the setting agent. A shaft having a plurality of paddle-like blades is rotatably mounted in the hopper for mixing the waste and setting agent. The mixture is pumped from the hopper to the disposal site, and the silicate is introduced into the output line, mixed by the pumping of the material.

Such a device is advantageous in situations where the waste is generally well liquefied and held in ponds containing moderate quantities. In the case of sewage, however, as well as in many other situations, a device of this type often will not be usable. Where the sewage waste is processed directly as a sludge from a municipal waste water treatment facility, for example, the device will not have sufficient capacity to handle the quantity of waste material generated.

Various other mixing devices for differing applications are known. For example, in U.S. Patent No. 4,281,934, issued August 4, 1981, a mixer of the type also known as a pug mill is disclosed. A pair of counter-rotated mixing shafts are mounted in parallel longitudinally along a trough. A plurality of blades are mounted radially to each shaft, staggered by 90° around each shaft whereby the blades of each follow one another in helical succession. The mixer is designed for use with heavy materials, such as construction materials, and as the shafts are rotated, the material is both mixed and advanced along the trough to a discharge end.

Due to the typical characteristics of the organic waste material to be processed, such as sewage, however, either the mobile unit or the simple mixer discussed above for adding the silicate and setting agent to the waste is insufficient. In addition to the solid and liquid components of the waste, a significant amount of stringy and fibrous material is typically present. In known mixers of the type discussed above, the relatively square, radially-extending blades or paddles tend to be coated by such material, reducing the mixer's effectiveness, and requiring halting of the mixer for cleaning. In addition, the high viscosity of the waste material requires more than a mixer for combining the waste with the silicate and setting agent. An entire processing system is required to reduce the waste viscosity to a level that will permit adequate mixing, and allow sufficient throughput to make processing the waste practical.

What is needed, therefore, is an apparatus and method for producing a fertilizer from organic waste material. Such an apparatus and method should be operative to combine the waste material, carried in a sludge, with a silicate and a setting agent in a manner that renders production of such a fertilizer both practical and economical.

The present invention provides an apparatus and process for treating liquid and semi-solid organic waste materials carried within a sludge, by adding to the sludge an alkali metal silicate and a setting agent.

According to one aspect of the present invention, there is provided an apparatus, generally of the type disclosed in FR—A—2272044, for treating organic waste material carried within a sludge, by adding to the sludge an alkali metal silicate and a setting agent, said apparatus including a mixer including a trough having an input and a discharge end, at least one rotatable shaft mounted longitudinally along said trough, a plurality of blades mounted to said shaft, and means for rotating said shaft. The apparatus is characterised by:

means for mechanically working the sludge to reduce its viscosity;

means for directing the sludge from said viscosity reduction means to said input end of said mixer;

means for introducing the setting agent into said trough at a point substantially adjacent said input end; and

means for introducing the alkali metal silicate into said trough at a point along said trough between said setting agent introduction point and said discharge end.

In one embodiment a tank is also provided, into which the sludge is directed after passing through the mixer. A pump mounted within the tank lifts the tank contents therefrom, and includes a means for chopping the tank contents during pumping. A second mixer is also provided which also includes a trough having an input end and a discharge end, at least one rotatable shaft mounted longitudinally along the trough, and a plurality of blades mounted to the shaft. The shaft is rotated, and the sludge from the pump is directed to the input end of the second mixer. Water is selectively introduced also at the input end, and the setting agent is introduced into the trough of the second mixer at a point substantially adjacent the input end. The alkali metal silicate is introduced into the trough at a point along the trough between the setting agent introduction point and the discharge end.

The apparatus may further include an additional pump mounted within the tank for lifting the contents of the tank therefrom, with the pump including a means for chopping the tank contents during pumping. The output of the pump is directed back into the tank.

The apparatus may include a further pump mounted within the tank for lifting the contents of the tank therefrom, including means for chopping the tank contents during pumping. A third mixer is provided including a trough having an input end and a discharge end, at least one rotatable shaft mounted longitudinally along the trough, and a plurality of blades mounted to the shaft. The shaft is driven for rotation. The output of the pump is directed to the input end of the third mixer, and the output of the third mixer is directed back into the tank.

The apparatus may further include means for delivering the setting agent and the silicate to their respective points of introduction into the second mixer, and means for determining and adjusting the rates of delivery of the setting agent and the silicate into the second mixer.

The apparatus may further include a control means responsive to the delivery rate of the silicate, setting agent, and sludge into the mixer, and operative to cause the adjustment of the rates accordingly.

The second mixer may include an elongated trough having an input end and a discharge end, and a pair of parallel rotatable shafts disposed lengthwise along the trough. The shafts are counter-rotated, with a plurality of blades mounted to each shaft. Each blade has a leading edge substantially defining a portion of the circumference of a circle, and a trailing edge substantially defining a chord of the circle, with the resulting surface area of each of the blades being less than half the area of the defined circle. Each blade is mounted at one end to one of the shafts such that the trailing edge is substantially tangent to the shaft.

According to another aspect of the invention, there is provided a mixer, generally of the type disclosed in DE—C—29394, for combining a sludge carrying organic waste material with an alkali metal silicate and a setting agent, including:

an elongated trough having an input and a discharge end;

a pair of parallel rotatable shafts disposed lengthwise along said trough;

means for counter-rotating said shafts; and a plurality of blades mounted to each said shaft.

The mixer is characterised by:

each of said blades having a leading edge substantially defining a portion of the circumference of a circle, a trailing edge substantially defining a chord of said circle, the surface area of each of said blades being less than half the area of said circle, each said blade being mounted at one end to one of said shafts such that said trailing edge is substantially tangent to said shafts;

means for introducing the sludge at said input end of said trough; and

means for discharging the contents of said trough at said discharge end thereof.

According to a further aspect of the invention, there is provided a continuous method of treating sewage sludge, generally as disclosed in AU—A—75709, including the steps of:

pumping the sludge into a continuous mixer;

adding a quantity of setting agent into the mixer;

mixing the sludge and setting agent;

adding to the mixed sludge and setting agent a quantity of an alkali metal silicate;

mixing the silicate into the sludge and setting agent; and

transferring the mixed product from the mixer to a holding area where the solidification reaction of the sludge, setting agent, and alkali metal silicate proceeds to completion resulting in a friable end product. ·

The method is characterised by:

mechanically working the sludge prior to pumping the sludge into said mixer to an extent sufficient to reduce its viscosity by:

feeding the raw sludge through a mixing apparatus to work the sludge into a homogeneous mass;

then feeding the mixed sludge into one end of an elongated tank and recirculating the sludge through a chopping pump to break up large particles and to further reduce the viscosity of the sludge; and

then pumping the liquefied sludge from the other end of the tank to the continuous mixer.

In order that the invention may be more readily understood, reference will now be made to the accompanying drawings, in which:

Fig. 1 is a schematic diagram showing the waste treatment apparatus of the present invention;

Fig. 2 is a sectional view of a chopper pump used within the treatment apparatus;

Fig. 3 is a top view of a mixing device used within the treatment apparatus, showing a portion of the cover plate cut away;

Fig. 4 is a view taken generally along line 4—4 of Fig. 3; and

Fig. 5 is a view taken generally along line 5—5 of Fig. 3.

As used herein, the term "organic waste" includes raw human wastes and sludges from various organic sources. The organic waste is preferably obtained from sewage, and is a mixture of "waste activated sludge", which is the activated sludge obtained from the aeration field of a waste water treatment facility, and "primary sludge" from the settling of solids as the waste water first enters the waste water treatment plant. The ratio of waste activated sludge to primary sludge is not critical.

The present invention is based upon the mixing of commercial or domestic wastes with a alkali metal silicate which, in the presence of a silicate setting agent, causes the mixture to undergo consolidation and solidification. Greater detail regarding this process may be found in U.S. Patent No. 3,837,872, which is hereby incorporated by reference. Any alkali metal silicate can be used in the present invention, including sodium silicate and potassium silicate. Sodium silicate is preferred, because it is the least expensive and is generally available in the quantities required. The sodium silicate is used in its commercial liquid form.

A variety of setting agents may be used with the present invention. Such setting agents are typified by such pozzolanic compounds as Portland cement, lime, gypsum, calcium carbonate, kiln dust, and fly ash, all of which have a quick gel action continuing with a hardening reaction over a period of time. The properties of Portland cement as a setting agent are excellent, and in addition, it is economical and readily available in large quantities. Also, the reaction rate with the silicate is easily controllable. Thus, the use of Portland cement as the setting agent is preferred.

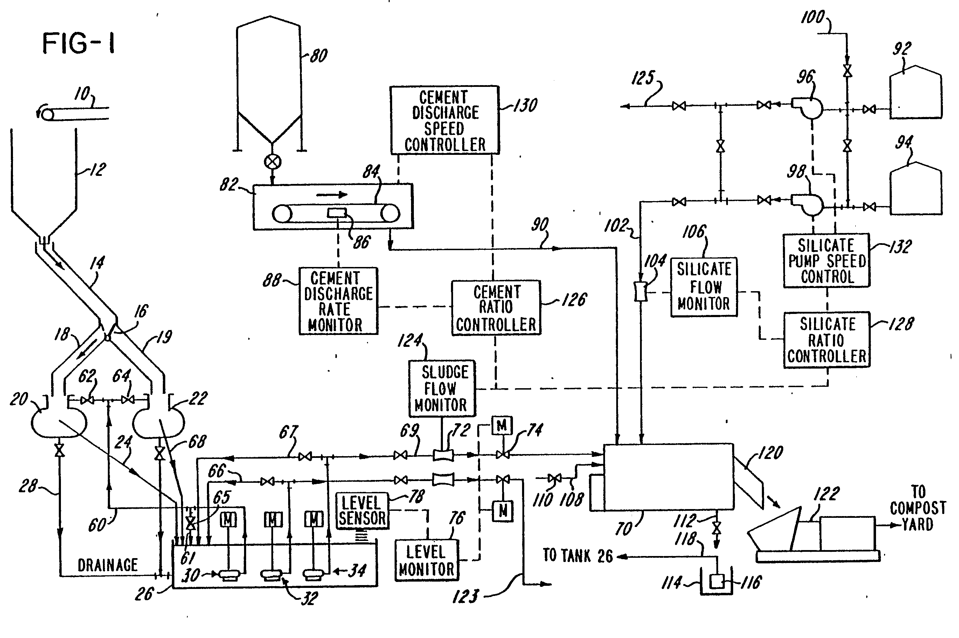

The apparatus for treating the organic waste is shown schematically in Fig. 1, from which the over-all scheme of the continuous sludge treating process can be ascertained. The waste material, in the form of a sludge, is carried into the system by a conveyor 10 or the like from a sewage treatment facility or other source. This sludge may typically be the cake output of a filter press or the like. Conveyor 10 deposits the sludge within a storage bin 12, from which the sludge can enter the apparatus at a relatively uniform rate. The sludge as deposited within bin 12 is a highly viscous, thixotropic material. While the viscosity of the sludge is not uniform, average viscosity is typically estimated at in the order of 100,000 centipoise.

The sludge exits the storage bin 12 through a chute 14 connected to the bottom of bin 12. A diverter 16 directs the sludge into either of two branch chutes 18 and 19, each of which empties into one of two mixers 20 and 22, respectively.

As will be described in greater detail below, mixers 20 and 22 each include a trough having an input end and a discharge end. Each trough further includes a pair of shafts mounted longitudinally along the trough, with a plurality of blades attached to each shaft. The shafts are counter-rotated, which both mixes the contents of the trough, and draws the contents from the input end to the discharge end.

As shown in Fig. 1, diverter 16 is positioned to direct the sludge from bin 12 into branch chute 18 and into the input end of mixer 20, which operates to decrease the sludge viscosity through mixing. Upon exiting mixer 20 at its discharge end, the sludge is directed by conduit 24 into a tank 26. In addition, a drainage line 28 is provided from mixer 20, so that any excess water released from the sludge during mixing may also be directed into tank 26.

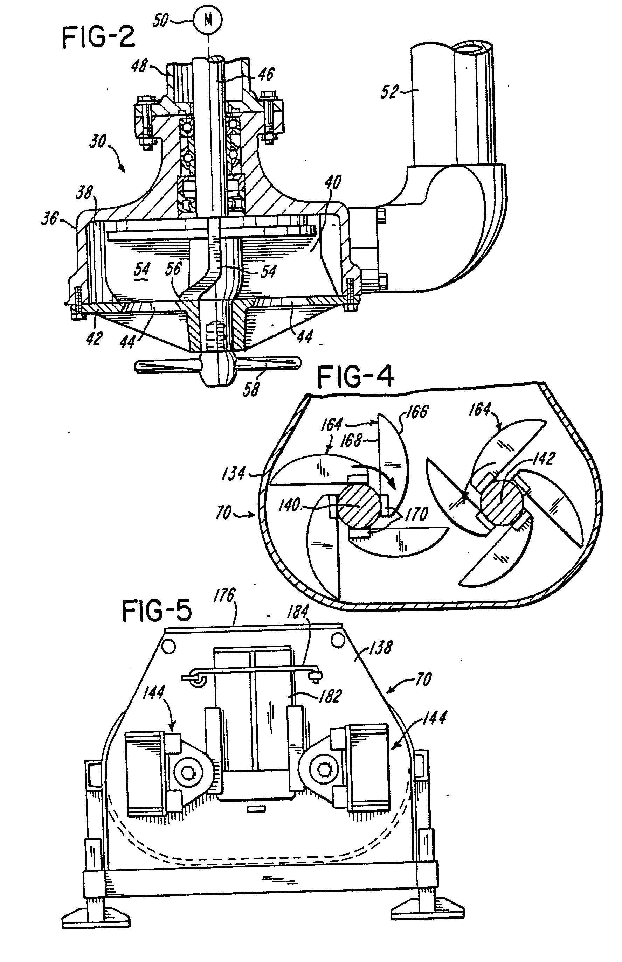

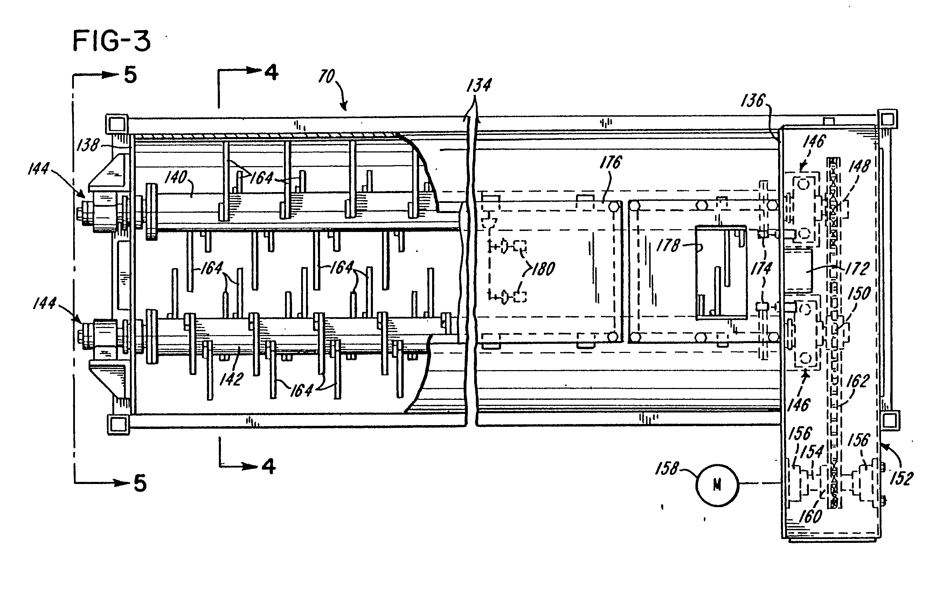

Three chopper pumps 20, 32, and 34 are mounted within tank 26 for pumping and simultaneously chopping the sludge contained within the tank 26, again for purposes of further lowering viscosity. Each of pumps 30, 32, and 34 are identical, with pump 30 being shown in greater detail in Fig. 2. A pump housing 36 provides a chamber 38 into which an impeller 40 is mounted. Lower cover plate 42, mounted to housing 36, includes a pair of inlet openings 44 through which the sludge to be pumped is drawn. Impeller 40 is mounted to a rotatable drive shaft 46, which extends upwardly through shaft housing 48 and is connected to motor 50. Energization of motor 50 causes the impeller 40 to draw the sludge through the input openings 44, into pumping chamber 38, and forces the sludge outwardly through output conduit 52. Impeller 40 includes a plurality of impeller vanes 54, each of which includes a leading chopper edge 56. In addition, shaft 46 extends slightly below impeller 40, and carries at the end thereof a disintegrator tool 58. Rotation of the tool 58 through the incoming sludge, as well as action of the chopper edge 56 of each impeller vane 54, operates to masticate the sludge being drawn through pump 30. In addition, the pumping action of pump 30 operates to decrease the viscosity of the sludge.

Pump 30, as described above, is commercially available from Vaughan Co., Inc., of Montesano, Washington, U.S.A., referred to as a Heavy Duty Chopper Pump.

Referring back to Fig. 1, the output of pump 30 is directed into a return conduit 60 which selectively directs the sludge into the input end of either mixer 20 or 22 or back into tank 26 through conduit 61. Direction of the sludge is performed by appropriately opening or closing valves 62, 64 or 65.

The output from pumps 32 and 34 may be selectively directed into conduits 66 and 67, respectively, by appropriate valves shown in Fig. 1. Conduits 66 and 67 return the pumped sludge directly back into tank 26.

The various alternate conduits connecting mixers 20 and 22 and tank 26 enable a variety of routings for the sludge. Normally, the sludge will be passed through mixer 20, into tank 26, and then will be pumped by pump 30. The sludge will be directed immediately back into tank 26 through return conduit 61, from which is will be pumped by either pump 32 or 34 out of tank 26. The purpose of mixers 20 and 22 and tank 26, however, is to insure that the sludge has been sufficiently liquefied to enable proper mixing of the sludge with the silicate and setting agent. Accordingly, depending upon the initial quantity of solid or semi-solid material within the sludge, and the overall viscosity of the sludge, various alternative routings for the sludge may need to be used.

For example, mixer 22 will normally be used as a back-up for mixer 20. When necessary, however, sludge from tank 26 may be pumped by pump 30 through conduit 60, and directed into mixer 22. Upon exiting mixer 22 at the discharge end, the sludge is directed by conduit 68 back into tank 26. In any event, upon exiting the tank 26 for the final time, the sludge viscosity will have been reduced to an average estimated in the order of 500 centipoise.

The liquefied sludge is removed from tank 26 for the final time by pump 34, and is directed along conduit 69 to the input end of mixer 70. An in-line flow measurement device 72 is located in conduit 69 for monitoring the flow of sludge through the conduit. In addition, a motorized valve 74 is provided in conduit 69, and is controlled for actuation by level monitor 76. Monitor 76 is in turn responsive to level sensor 78, which senses the level of the sludge within tank 26. In the event the sludge level becomes too low within tank 26, monitor 76 operates to close valve 74, preventing removal of sludge from tank 26. In the event the sludge level becomes too high, monitor 76 ascertains that valve 74 is open, and provides an alerting signal to the operator of the apparatus.

The mixer 70 is similar to mixers 20 and 22, and includes a trough having an input and a discharge end. A pair of counter-rotated shafts mounted longitudinally within the trough serve to both mix the contents and move them along the length of the trough. Within mixer 70, the waste material sludge is combined with the setting agent and the alkali metal silicate.

The setting agent is held prior to use within a silo 80 or other appropriate storage means. The setting agent is fed into a weigh feeder 82, including a conveyor belt 84 and a belt scale 86. A discharge rate monitor 88 is responsive to belt scale 86 for monitoring the rate at which the setting agent is fed into the system. The agent is then directed from weigh feeder 82 through conduit 90 into the mixer 70 at a point near the input end.

A pair of storage tanks 92 and 94 are provided for holding the silicate prior to use. A pair of pumps 96 and 98 are provided for delivering the contents of tanks 92 and 94, respectively, and are preferably of the rotary type such as those manufactured, for example, by the Viking Pump Division, Houdaille Industries, Inc., Cedar Falls, Iowa. The output conduits from tanks 92 and 94 are interconnected as illustrated in Fig. 1, to enable the silicate to be supplied to mixer 70 from either tank 92 or 94. In addition, a water inlet 100 is provided to facilitate flushing of the system.

Pumps 96 and 98 direct the silicate into a conduit 102 for delivery to mixer 70. An in-line flow measurement device 104 is located in conduit 102, coupled to a responsive silicate flow monitor 106. Conduit 102 delivers the silicate into mixer 70 at a point between the setting agent introduction point and the discharge end of mixer 70.

A water inlet line 108, including a valve 110, is provided into the input end of mixer 70. Water may be supplied through line 108, to insure adequate moisture for proper reaction of the setting agent. Additionally, a drainage line 112 is provided from mixer 70, so that any excessive moisture contained within the mixer trough may be drained into a sump 114. A pump 116 is mounted in sump 114 for carrying liquid collected therein back to tank 26 for recirculation.

The mixed materials are recovered from mixer 70 at its discharge end, and directed by a chute 120 into a positive displacement pump 122. Pump 122 may be any appropriate commercially available pump, such as those available from American Pecco Corporation, Millwood, New York. The pump 122 delivers the mixture to an appropriate area where the solidification reaction is allowed to proceed for a period of from four to six days. Once the reaction is complete, the treated waste is in the form of a friable material, ready for use as landfill, or to be broken or ground into small particles useful as fertilizer, or as a filler supplement to other products such as asphaltic type paving material.

A second mixer identical to mixer 70 may be added to the system shown in Fig. 1 in order to increase the processing capacity. In such a case, a second conduit 123 is connected to direct sludge output from pump 32 within tank 26 into the input of the second mixer. Silicate is supplied through a conduit 125 from tanks 92 and 94. Due to the quantity of setting agent required, however, a second independent silo is provided for supplying the mixer. It will be recognized, of course, that the various connections of the mixer inputs, the monitoring system (as will be described below), and the like associated with the second mixer will be identical to those shown for mixer 70 in Fig. 1.

The proportions of silicate and setting agent used must be adjusted for the particular waste sludge that is used to provide a solid, stable mass which can be readily disposed of. In most cases, the silicate is used in an amount of about 3 to 8 volumetric parts per 100 parts sludge, and the setting agent is used in an amount of about 5 to 20 parts by weight per 100 parts sludge.

One important factor in determining the amount of silicate and setting agent to be used is the percent solids content of the waste sludge. This can generally be determined by monitoring the rate of flow of the sludge through the conduit 69 between tank 26 and mixer 70. Typically, the lower the solids content of the waste, the less viscous the sludge will be, and the higher the flow rate through conduit 69. Thus, a sludge flow monitor 124 is provided, responsive to flow measuring device 72 located within conduit 69. The sludge flow monitor 124 is interconnected with a setting agent ratio controller 126 and a silicate ratio controller 128. Ratio controller 126 is further responsive to setting agent discharge rate monitor 88, and is operative to control the setting agent discharge speed controller 130 for varying the rate at which agent is fed into mixer 70. Similarly, silicate ratio controller 128 is responsive to both sludge flow monitor 124 and silicate flow monitor 106, and operates to control silicate pump speed control 132. Speed control 132 in turn controls pumps 96 and 98 for regulating the delivery rate of the silicate into mixer 70.

Controllers 126 and 128 may be adapted to control the proportions of silicate and setting agent automatically, or may be adapted for manual control by the operator of the apparatus. Additionally, appropriate indication devices (not shown) may be provided, for example on a main control panel or the like, to provide the operator of the device with visual indications of the various flow and delivery rates within the apparatus.

Under typical operating conditions, flow rate of sludge through conduit 69 will be on the order of 379 to 1136 litres (100 to 300 gallons) per minute, flow rate of setting agent through conduit 90 on the order of 38.6 to 226.8 kg (85 to 500 pounds) per minute, and flow rate of silicate through conduit 102 on the order of 18.9 to 68.1 litres (5 to 18 gallons) per minute.

A top view showing the mixer 70 in detail is presented in Fig. 3. It will be recognized that mixers 20 and 22 are similar to mixer 70, although they do not include provisions for introducing cement, silicate or water, as is necessary in mixer 70.

Mixer 70 includes an elongated trough 134 which serves as a container for the materials to be mixed. An end wall 136 defines the input end of the trough 134, and an opposite end wall 138 defines the discharge end. A pair of rotatable shafts 140 and 142 are mounted longitudinally along the interior of trough 134. The end of each shaft 140 and 142 adjacent end wall 138 is supported in an appropriate bearing housing 144, mounted to the outer surface of end wall 138. Similarly, bearing housings 146 are mounted to the outer surface of end wall 136 for supporting the opposite ends of shafts 140 and 142. The ends of shafts 140 and 142 extend beyond bearing housings 146, and each shaft 140 and 142 has a driving gear 148 and 150, respectively, mounted at its end.

End wall 136 further defines one portion of a drive housing 152 mounted at one end of mixer 70. A drive shaft 154 is rotatably mounted within housing 152, supported at each entrance thereto by bearing housings 156. Drive shaft 154 is driven by a motor 158 through an appropriate speed reducer, so that shaft 154 is preferably driven at a speed of about 300 rpm. A gear 160 is mounted to shaft 154, and a drive chain 162 is passed about gear 160. Chain 162 passes along the bottom of gear 150, and then over the top and around gear 148, so rotation of drive shaft 154 causes chain 162 to counter-rotate shafts 140 and 142. Gears 148, 150 and 160 are selected with a gear ratio between either gear 148 or 150 and gear 160 of 28 to 13, for a preferred rotational speed of shafts 140 and 142 of approximately 140 rpm.

A plurality of blades 164 are mounted to each of shafts 140 and 142 for mixing the contents of trough 134 and drawing the contents along the length of the trough. As seen in Figs. 3 and 4, the blades 164 are mounted sequentially along each shaft 140 and 142, with equal spacings both longitudinally and radially between succeeding blades 164. Each succeeding blade is displaced radially by 90° from the preceding blade about the shaft to which it is mounted; thus, the blades effectively define a helical pattern along the length of each shaft.

The configuration of the individual blades 164 can best be seen by reference to Fig. 4. Each blade 164 includes a leading edge 166, which defines a portion of the circumference of a circle. The trailing edge 168 of blade 164 defines a chord of the circle, so that the area of the portion of the circle defined by blade 164 is less than half the area of the entire circle. A mounting block 170 is attached to one end of blade 164, preferably by welding. Blade 164 is thus secured to either shaft 140 or 142 by bolts (not shown) passing through mounting block 170 and into the shaft. When mounted to shaft 140 or 142, the trailing edge 168 of blade 164 defines a tangent to the cross-section of the shaft.

Referring back to Fig. 3, an input opening 172 is provided in the end wall 136 for introduction into the trough 134 of the waste material sludge. In addition, nozzles 174 are mounted through end wall 136 for connection to the water inlet line 108 into mixer 70.

A cover plate 176 is mounted to the top of the trough 134. Near the end wall 136, an opening 178 is provided in cover plate 176 for introducing setting agent to trough 134. Additionally, a pair of silicate injection nozzles 180 are mounted to the underside of cover plate 176, at a point along trough 134 between opening 178 and discharge end wall 138. Thus, by the time the silicate is added to the mixture within trough 134, the setting agent and sludge have been relatively well combined.

The outer surface of discharge end wall 138 is shown in Fig. 5. A discharge gate 182 is slidably mounted on end wall 138 for vertical movement. A latch 184 is provided, for retaining gate 182 in a vertical position. By positioning gate 182, the rate of discharge from the mixer 70 can be regulated, with, of course, the rate of discharge increasing as the gate 182 is opened to a greater degree. Thus, the discharge rate, as well as to some extent the residence time of the mixture within mixer 70, may be controlled.

## Claims

1. A continuous method of treating sewage sludge, including the steps of:

pumping the sludge into a continuous mixer (70);

adding a quantity of setting agent into the mixer (70);

mixing the sludge and setting agent;

adding to the mixed sludge and setting agent a quantity of an alkali metal silicate;

mixing the silicate into the sludge and setting agent; and

transferring the mixed product from the mixer (70) to a holding area where the solidification reaction of the sludge, setting agent, and alkali metal silicate proceeds to completion resulting in a friable end product;

characterised by mechanically working the sludge prior to pumping the sludge into said mixer (70) to an extent sufficient to reduce its viscosity by:

feeding the raw sludge through a mixing apparatus (20) to work the sludge into a homogeneous mass;

then feeding the mixed sludge into one end of an elongated tank (26) and recirculating the sludge through a chopping pump (30) to break up large particles and to further reduce the viscosity of the sludge; and

then pumping the liquefied sludge from the other end of the tank (26) to the continuous mixer (70).

2. A continuous method of treating sewage sludge as defined in claim 1, including:

feeding the setting agent to the continuous mixer (70) at a variable controlled rate;

pumping the alkali metal silicate to the continuous mixer (70) with a variable volume pump (98); and sensing the flow rate of the liquefied sludge to the continuous mixer (70) and using the sludge flow rate information to control rate of feed of the setting agent and rate of flow of the silicate to the continuous mixer (70).

3. A continuous method of treating sewage sludge as defined in claim 1 or 2, wherein:

said mixing apparatus (20) includes an elongated trough (134) with an input end and a discharge end and at least one rotating shaft (140) mounted longitudinally along said trough (134) with a plurality of blades (164) thereon for mixing and advancing the sludge to the discharge end;

the sludge being directed from the discharge end of said mixing apparatus (20) into said tank (26); and

said continuous mixer (70) is of the same type as said mixing apparatus (20).

4. An apparatus for treating organic waste material carried within a sludge, by adding to the sludge an alkali metal silicate and a setting agent, said apparatus including a mixer (70) including a trough (134) having an input and a discharge end, at least one rotatable shaft (140) mounted longitudinally along said trough, a plurality of blades (164) mounted to said shaft (140), and means (158) for rotating said shaft (140), characterized by:

means (20, 34) for mechanically working the sludge to reduce its viscosity;

means (69) for directing the sludge from said viscosity reduction means (20, 34) to said input end of said mixer;

means (90) for introducing the setting agent into said trough (134) at a point substantially adjacent said input end; and

means (102) for introducing the alkali metal silicate into said trough (134) at a point along said trough (134) between said setting agent introduction point and said discharge end.

5. An apparatus as defined in claim 4, further including means (108) for introducing water into said trough (134) of said mixer (70) at said input end thereof.

6. An apparatus as defined in claim 4 or 5 wherein said viscosity reduction means (20, 34) includes:

a second mixer (20) including a second trough (134) having an input end and a discharge end, at least one rotatable shaft (140) mounted longitudinally along said trough (134), a plurality of blades (164) mounted to said shaft (140), and means (158) for rotating said shaft (140);

means (18) directing the sludge to said input end of said second trough (134);

a tank (26);

means (24) directing the sludge from said discharge end of said second mixer (20) into said tank (26); and

a pump (34) mounted within said tank (26) for lifting the contents of said tank (26) therefrom, said pump (34) including means (54) for chopping said tank contents during pumping.

7. An apparatus as defined in claim 6, wherein said means (18) for directing the sludge to said input end of said second mixer (20) includes a bin (12) for holding a quantity of the sludge and a chute (14) for carrying the sludge from said bin (12) to said second mixer (20).

8. An apparatus as defined in claim 6 or 7, further including a second pump (30) mounted within said tank (26) for lifting the contents of said tank (26) therefrom, said second pump (30) including means (54) for chopping said tank contents during pumping, and means (61) for directing the output of said second pump (30) back into said tank (26).

9. An apparatus as defined in claim 6 or 7, further including:

a second pump (30) mounted within said tank (26) for lifting the contents of said tank therefrom, said second pump (30) including means (54) for chopping said tank contents during pumping;

a third mixer (22) including a trough (134) having an input end and a discharge end, at least one rotatable shaft (140) mounted longitudinally along said trough (134), a plurality of blades (164) mounted to said shaft (140), and a means (158) for rotating said shaft (140);

means (60) for directing the output of said second pump (30) to the input end of said third mixer (22); and

means (68) for directing the output of said third mixer (22) to said tank (26).

10. An apparatus as defined in claim 8 or 9, further including means (65) for selectively alternatively directing the output of said second pump (30) back into said tank (26).

11. An apparatus as defined in any of claims 4 to 10, further including means (84) for delivering the setting agent to said setting agent introduction means (90), means (88) for determining the rate of delivery of the setting agent to said introduction means (90), and means (130) for selectively adjusting said rate of delivery.

12. An apparatus as defined in any of claims 4 to 11, further including means (98) for delivering the silicate to said silicate introduction means (102), means (106) for determining the rate of delivery of the silicate to said introduction means (102), and means (132) for selectively adjusting said rate of delivery.

13. An apparatus as defined in claims 11 and 12, further including:

means (126, 128) responsive to said setting agent rate determining means (88) and said silicate rate determining means (106) for operating said setting agent rate adjusting means (130) and said silicate rate adjusting means (132).

14. An apparatus as defined in any of claims 4 to 13, further including means (122) for collecting the output from said discharge end of said first mixer (70) and directing said output to a predetermined location remote from said mixer (70).

15. An apparatus as defined in claim 14, wherein said output collection and directing means (122) includes a positive displacement pump.

16. A mixer (70) for combining a sludge carrying organic waste material with an alkali metal silicate and a setting agent, including:

an elongated trough (134) having an input and a discharge end;

a pair of parallel rotatable shafts (140, 142) disposed lengthwise along said trough (134); and

means (158, 162) for counter-rotating said shafts (140, 142); and

a plurality of blades (164) mounted to each said shaft (140, 142), characterised by: each of said blades (164) having a leading edge (166) substantially defining a portion of the circumference of a circle, a trailing edge (168) substantially defining a chord of said circle, the surface area of each of said blades being less than half the area of said circle, each said blade (164) being mounted at one end to one of said shafts (140, 142) such that said trailing edge (168) is substantially tangent to said shafts (140, 142);

means (172) for introducing the sludge at said input end of said trough (134); and

means (182) for discharging the contents of said trough (134) at said discharge end thereof.

17. A mixer (70) as defined in claim 16, wherein said blades (164) are mounted along said shafts (140, 142) at uniform longitudinal spacings, each succeeding one of said blades (164) being mounted at a radial displacement of 90° from the preceding one of said blades (164), whereby said blades (164) define a helix along the length of each said shafts (140, 142).

18. A mixer (70) as defined in claim 16 or 17, further including an end wall (138) covering said discharge end of said trough (134), an opening defined in said end wall for permitting egress of the contents of said trough (134) therefrom, a gate (182) for covering said opening, said gate (182) being positionable to cover a selected amount of said opening, and latch means (184) for retaining said gate (182) in a selected position.

19. A mixer (70) as defined in claims 16, 17, or 18, further including:

means (178) for introducing the setting agent into said trough (134) at a point substantially adjacent said input end; and

means (180) for introducing the alkali metal silicate into said trough (134) at a point along said trough (134) between said setting agent introduction point and said discharge end.

20. A mixer (70) as defined in any of claims 16 to 19, further including means (174) for introducing water into said trough (134) at said input end.

21. A mixer (70) as defined in claim 20, further including an end wall (136) covering said input end of said trough (134), and wherein said water introduction means (174) includes at least one spray nozzle mounted to the interior side of said end wall (136) for directing the water into said trough (134).

22. A mixer (70) as defined in claim 19, or claim 19 in combination with claim 20 or 21, further including a cover plate (176) for closing the top of said trough (134), and wherein said setting agent introduction means (178) includes an opening defined in said cover plate.

23. A mixer (70) as defined in claim 22, wherein said silicate introduction means includes at least one spray nozzle mounted to the bottom side of said cover plate (176) for directing the silicate into said trough (134).

## Patentansprüche

1. Kontinuierliches Verfahren zur Behandlung von Abwasserschlamm mit den Stufen, bei denen man

den Schlamm in einen kontinuierlichen Mischer (70) pumpt,

eine Menge von Verfestigungsmittel in den Mischer (70) gibt,

den Schlamm und das Verfestigungsmittel miteinander vermischt,

zu dem Gemisch von Schlamm und Verfestigungsmittel eine Menge an Alkalisilikat zugibt,

das Silikat in den Schlamm und das Verfestigungsmittel einmischt und

das gemischte Produkt aus dem Mischer (70) zu einem Lagerungsbereich überführt, wo die Verfestigungsreaktion des Schlammes, Verfestigungsmittels und Alkalisilikats bis zur Vollständigkeit voranschreitet, was zu einem bröckeligen Endprodukt führt,

dadurch gekennzeichnet, daß man den Schlamm vor dem Pumpen des Schlammes in den Mischer (70) ausreichend mechanisch bearbeitet, daß seine Viskosität herabgesetzt wird, indem man

den Rohschlamm durch eine Mischapparatur (20) führt, um den Schlamm in eine homogene Masse umzuwandeln,

dann den gemischten Schlamm in ein Ende eines länglichen Behälters (26) einspeist und den Schlamm durch eine Zerkleinerungspumpe (30) im Kreislauf umpumpt, um große Teilchen aufzubrechen und die Viskosität des Schlammes weiter zu vermindern, und

dann den verflüssigten Schlamm von dem anderen Ende des Behälters (26) zu dem kontinuierlichen Mischer (70) pumpt.

2. Kontinuierliches Verfahren zur Behandlung von Abwasserschlamm nach Anspruch 1, bei dem man

das Verfestigungsmittel mit einer variablen gesteuerten Geschwindigkeit in den kontinuierlichen Mischer (70) einspeist,

das Alkalisilikat zu dem kontinuierlichen Mischer (70) mit einer Pumpe (98) mit variablem Volumen pumpt und

die Fließgeschwindigkeit des verflüssigten Schlammes zu dem kontinuierlichen Mischer (70) abfühlt und die Information über die Schlammflußgeschwindigkeit verwendet, um die Beschikkungsgeschwindigkeit des Verfestigungsmittels und die Fließgeschwindigkeit des Silikats zu dem kontinuierlichen Mischer (70) zu steuern.

3. Kontinuierliches Verfahren zur Behandlung von Abwasserschlamm nach Anspruch 1 oder 2, bei dem

die Mischapparatur (20) eine längliche Wanne (134) mit einem Eingangsende und einem Austragsende und wenigstens eine in Längsrichtung entlang der Wanne (134) befestigte rotierende Welle (140) mit mehreren Schaufeln (164) daran zum Mischen und Vorrücken des Schlammes zu dem Austragsende aufweist,

der Schlamm von dem Austragsende der Mischapparatur (20) in den Behälter (26) geführt wird und

der kontinuierliche Mischer (70) vom gleichen Typ wie die Mischapparatur (20) ist.

4. Vorrichtung zur Behandlung von organischem Abfall, der in einem Schlamm mitgeführt wird, durch Zugabe eines Alkalisilikats und eines Verfestigungsmittels zu dem Schlamm, wobei die Vorrichtung einen Mischer (70) mit einer Wanne (134) mit einem Eingangs- und einem Austragsende, mit wenigstens einer in Längsrichtung entlang der Wanne befestigten drehbaren Welle (140), mehreren an dieser Welle (140) befestigten Schaufeln (164) und Einrichtungen (158) zum Drehen der Welle (140) aufweist, gekennzeichnet durch

Einrichtungen (20, 34) zur mechanischen Bearbeitung des Schlammes unter Verminderung seiner Viskosität,

Einrichtungen (69) zur Führung des Schlammes von der die Viskosität herabsetzenden Einrichtung (20, 34) zu dem Eingangsende des Mischers,

Einrichtungen (90) zur Einführung des Verfestigungsmittels in die Wanne (134) an einem Punkt im wesentlichen in Nachbarschaft zu dem Eingangsende und

Einrichtungen (102) zur Einführung des Alkalisilikats in die Wanne (134) an einem Punkt entlang der Wanne (134) zwischen dem Einführungspunkt für das Verfestigungsmittel und dem Austragsende.

5. Vorrichtung nach Anspruch 4, weiterhin mit Einrichtungen (108) zur Einführung von Wasser in die Wanne (134) des Mischers (70) an deren Eingangsende.

6. Vorrichtung nach Anspruch 4 oder 5, bei der die die Viskosität vermindernde Einrichtung (20, 34) aufweist:

einen zweiten Mischer (20) mit einer zweiten Wanne (134) mit einem Eingangsende und einem Austragsende, wenigstens einer in Längsrichtung entlang der Wanne (134) befestigten drehbaren Welle (140), mehreren an dieser Welle (140) befestigten Schaufeln (164) und Einrichtungen (158) zum Drehen der Welle (140),

Einrichtungen (18), die den Schlamm zu dem Eingangsende der zweiten Wanne (134) führen,

einen Behälter (26),

Einrichtungen (24), die den Schlamm von dem Austragsende des zweiten Mischers (20) in den Behälter (26) führen, und

eine Pumpe (34), die in dem Behälter (26) für ein Herausheben des Inhalts dieses Behälters (26) aus ihm befestigt ist, wobei diese Pumpe (34) Einrichtungen (54) zum Zerkleinern des Behälterinhalts während des Pumpens aufweist.

7. Vorrichtung nach Anspruch 6, bei der die Einrichtungen (18) zur Führung des Schlammes zum Eingangsende des zweiten Mischers (20) einen Bunker (12) zur Lagerung einer Menge des Schlammes und ein Gefälle (14) zur Überführung des Schlammes von dem Bunker (12) zu dem zweiten Mischer (20) aufweisen.

8. Vorrichtung nach Anspruch 6 oder 7, weiterhin mit einer zweiten Pumpe (30), die in dem Behälter (26) zum Herausheben des Inhalts dieses Behälters (26) aus ihm befestigt ist, wobei diese zweite Pumpe (30) Einrichtungen (54) zum Zerkleinern des Behälterinhalts während des Pumpens und Einrichtungen (61) zur Überführung des Ausgangs der zweiten Pumpe (30) zurück zu dem Behälter (26) aufweist.

9. Vorrichtung nach Anspruch 6 oder 7, weiterhin mit einer zweiten Pumpe (30), die in dem Behälter (26) zum Herausheben des Inhalts dieses Behälters aus ihm befestigt ist und die zweite Pumpe (30) Einrichtungen (54) zum Zerkleinern des Behälterinhalts während des Pumpens aufweist,

einem dritten Mischer (22) mit einer Wanne (134) mit einem Eingangsende und einem Austragsende, wenigstens einer in Längsrichtung entlang der Wanne (134) befestigten drehbaren Welle (140), mehreren an dieser Welle (140) befestigten Schaufeln (164) und einer Einrichtung (158) zum Drehen der Welle (140),

Einrichtungen (60) zur Überführung des Ausgangs der zweiten Pumpe (30) zu dem Eingangsende des dritten Mischers (22) und

Einrichtungen (68) zur Überführung des Ausgangs des dritten Mischers (22) zu dem Behälter (26).

10. Vorrichtung nach Anspruch 8 oder 9, weiterhin mit Einrichtungen (65) zur selektiven alternativen Überführung des Ausgangs der zweiten Pumpe (30) zurück in den Behälter (26).

11. Vorrichtung nach einem der Ansprüche 4 bis 10, weiterhin mit Einrichtungen (84) zur Abgabe des Verfestigungsmittels zu der Einführeinrichtung (90) für dieses Verfestigungsmittel, Einrichtungen (88) zur Bestimmung der Geschwindigkeit der Abgabe des Verfestigungsmittels an die Einführeinrichtung (90) und Einrichtungen (130) zur selektiven Einstellung dieser Abgabegeschwindigkeit.

12. Vorrichtung nach einem der Ansprüche 4 bis 11, weiterhin mit Einrichtungen (98) zur Abgabe des Silikats an die Silikateinführeinrichtung (102), Einrichtungen (106) zur Bestimmung der Abgabegeschwindigkeit des Silikats an die Einführeinrichtung (102) und Einrichtungen (132) zur selektiven Einstellung dieser Abgabegeschwindigkeit.

13. Vorrichtung nach den Ansprüchen 11 und 12, weiterhin mit

Einrichtungen (126, 128), die auf die Einrichtung (88) zur Bestimmung der Verfestigungsmittelgeschwindigkeit und auf die Einrichtung (106) zur Bestimmung der Silikatgeschwindigkeit ansprechen, um die Einrichtung (130) zur Einstellung der Verfestigungsmittelgeschwindigkeit und die Einrichtung (132) zur Einstellung der Silikatgeschwindigkeit zu betätigen.

14. Vorrichtung nach einem der Ansprüche 4 bis 13, weiterhin mit Einrichtungen (122) zum Sammeln des Ausgangs aus dem Austragsende des ersten Mischers (70) und zur Überführung dieses Ausgangs zu einer vorbestimmten Stelle, die von dem Mischer (70) entfernt ist.

15. Vorrichtung nach Anspruch 14, bei der die Ausgangssammel- und Überführungseinrichtung (122) eine positive Verschiebungspumpe aufweist.

16. Mischer (70) zur Vereinigung eines organischen Abfall mit sich tragenden Schlammes mit einem Alkalisilikat und einem Verfestigungsmittel mit

einer länglichen Wanne (134) mit einem Eingangs- und einem Austragsende,

einem Paar in Längsrichtung entlang der Wanne (134) angeordneter praller drehbarer Wellen (140, 142) und

Einrichtungen (158, 162) zum gegenläufigen Drehen der Wellen (140, 142)

sowie mehreren an jeder dieser Wellen (140, 142) befestigten Schaufeln (164), dadurch gekennzeichnet, daß jede der Schaufeln (164) eine Führungskante (166), die im wesentlichen einen Abschnitt des Umfangs eines Kreises definiert, eine Hinterkante (168), die im wesentlichen eine Sehne dieses Kreises definiert, haben, wobei die Oberfläche einer jeden dieser Schaufeln kleiner als die Hälfte der Fläche dieses Kreises ist und jede dieser Schaufeln (164) an einem Ende an einer dieser Wellen (140, 142) derart befestigt ist, daß die Führungskante (168) im wesentlichen eine Tangente zu diesen Wellen (140, 142) ist,

Einrichtungen (172) zur Einführung des Schlammes in das Eingangsende der Wanne (134) vorgesehen sind und

Einrichtungen (182) zur Entfernung des Inhalts der Wanne (134) an ihrem Austragsende vorgesehen sind.

17. Mischer (70) nach Anspruch 16, bei dem die Schaufeln (164) entlang den Wellen (140, 142) in gleichmäßigen Längsabständen befestigt sind, wobei jede auf eine andere folgende Schaufel (164) mit einer radialen Verschiebung von 90° gegenüber der vorausgehende dieser Schaufeln (164) befestigt ist und wobei die Schaufeln (164) eine Spirale entlang der Länge jeder der Wellen (140, 142) definieren.

18. Mischer (70) nach Anspruch 16 oder 17, weiterhin mit einer Endwand (138), die das Austragsende der Wanne (134) bedeckt, einer Öffnung, die in dieser Endwand vorgesehen ist, um einen Ausgang des Inhalts der Wanne (134) daraus zu gestatten, einem Tor (182) zur Bedeckung dieser Öffnung, wobei dieses Tor (182) so angeordnet werden kann, daß es eine ausgewählte Menge der Öffnung bedeckt, und Schnappeinrichtungen (184) zum Halten des Tores (182) in einer ausgewählten Stellung.

19. Mischer (70) nach Anspruch 16, 17 oder 18, weiterhin mit

Einrichtungen (178) zur Einführung des Verfestigungsmittels in die Wanne (134) an einem Punkt im wesentlichen in Nachbarschaft zu dem Eingangsende und

Einrichtungen (180) zur Einführung des Alkalisilikats in diese Wanne (134) an einem Punkt entlang der Wanne (134) zwischen dem Einführungspunkt für das Verfestigungsmittel und dem Austragsende.

20. Mischer (70) nach einem der Ansprüche 16 bis 19, weiterhin mit Einrichtungen (174) zur Einführung von Wasser in die Wanne (134) an deren Eingangsende.

21. Mischer (70) nach Anspruch 20, weiterhin mit einer Endwand (136), die das Eingangsende dieser Wanne (134) verdeckt, wobei die Wassereinführungseinrichtung (174) wenigstens eine an der Innenseite der Endwand (136) befestigte Sprühdüse aufweist, um das Wasser in die Wanne (134) zu richten.

22. Mischer (70) nach Anspruch 19 oder Anspruch 19 in Verbindung mit Anspruch 20 oder 21, weiterhin mit einer Deckplatte (176) zum Verschließen des oberen Endes der Wanne (134), wobei die Einführeinrichtung (178) für das Verfestigungsmittel eine in dieser Deckplatte vorgesehene Öffnung aufweist.

23. Mischer (70) nach Anspruch 22, bei dem die Silikateinführeinrichtung wenigstens eine an der Bodenseite der Deckplatte (176) befestigte Sprühdüse aufweist, um das Silikat in die Wanne (134) zu führen.

**Revendications**

1. Procédé continu pour traiter de la boue d'eau d'égout, comprenant les stades:

de pomper la boue dans un mélangeur continu (70);

d'introduire une certaine quantité d'agent de prise dans le mélangeur (70);

de mélanger la boue et l'agent de prise;

d'ajouter à la boue et à l'agent de prise mélangés une certaine quantité d'un silicate de métal alcalin;

d'incorporer le silicate à la boue et à l'agent de prise; et

de transférer le produit mélangé du mélangeur (70) à une aire d'attente où la réaction de solidification de la boue, de l'agent de prise et du silicate de métal alcalin progresse jusqu'à son terme en donnant un produit final friable;

caractérisé en ce qu'on travaille mécaniquement la boue, avant de pomper la boue dans le mélangeur (70), jusqu'à un degré suffisant pour abaisser sa viscosité en:

admettant la boue brute dans un appareil mélangeur (20) pour travailler la boue en une masse homogène;

puis en admettant la boue mélangée à une extrémité d'une cuve oblongue (26) et en recyclant la boue par une pompe déchiqueteuse (30) pour fragmenter les grosses particules et réduire davantage la viscosité de la boue; et

en pompant ensuite la boue liquéfiée à partir de l'autre extrémité de la cuve (26) jusqu'au mélangeur continu (70).

2. Procédé continu pour traiter de la boue d'eau d'égout suivant la revendication 1, où on opère en:

admettant l'agent de prise dans le mélangeur continu (70) à un débit réglé variable;

pompant le silicate de métal alcalin dans le mélangeur continu (70) au moyen d'une pompe volumétrique variable (98); et

détectant le débit de boue liquéfiée au mélangeur continu (70) et utilisant l'information relative au débit de boue pour régler le débit d'apport de l'agent de prise et le débit d'apport du silicate au mélangeur continu (70).

3. Procédé continu pour traiter de la boue d'eau d'égout suivant la revendication 1 ou 2, dans lequel:

l'appareil mélangeur (20) comprend une auge oblongue (134) comportant une extrémité d'entrée et une extrémité de sortie et au moins un arbre rotatif (140) monté longitudinalement au long de l'auge (134) et portant plusieurs pales (164) pour mélanger et propulser la boue vers l'extrémité de sortie;

la boue étant amenée de l'extrémité de sortie de l'appareil mélangeur (20) dans la cuve (26); et

le mélangeur continu (70) est du même type que l'appareil mélangeur (20).

4. Appareil pour traiter des déchets organiques véhiculés dans une boue, par addition d'un silicate de métal alcalin et d'un agent de prise à la boue, l'appareil comprenant un mélangeur (70) qui comprend une auge (134) comportant une extrémité d'entrée et une extrémité de sortie, au moins un arbre rotatif (140) monté longitudinalement au long de l'auge, plusieurs pales (164) montées sur l'arbre (140) et des moyens (158) pour faire tourner l'arbre (140), caractérisé par:

des moyens (20, 34) pour travailler mécaniquement la boue aux fins d'abaisser sa viscosité;

des moyens (69) pour diriger la boue depuis les moyens de réduction de la viscosité (20, 34) jusqu'à l'extrémité d'entrée du mélangeur;

des moyens (90) pour introduire l'agent de prise dans l'auge (134) en un point sensiblement adjacent à cette extrémité d'entrée; et

des moyens (102) pour introduire le silicate de métal alcalin dans l'auge (134) en un point au long de l'auge (134) entre le point d'introduction de l'agent de prise et l'extrémité de sortie.

5. Appareil suivant la revendication 4, comprenant en outre des moyens (108) pour introduire de l'eau dans l'auge (134) du mélangeur (70) à l'extrémité d'entrée de ce dernier.

6. Appareil suivant la revendication 4 ou 5, dans lequel les moyens pour abaisser la viscosité (20, 34) comprennent:

un second mélangeur (20) comprenant une seconde auge (134) comportant une extrémité d'entrée et une extrémité de sortie, au moins un arbre rotatif (140) monté longitudinalement au long de l'auge (134), plusieurs pales (164) montées sur l'arbre (140) et des moyens (158) pour faire tourner l'arbre (140);

des moyens (18) pour diriger la boue vers l'extrémité d'entrée de la seconde auge (134);

une cuve (26);

des moyens (24) pour diriger la boue de l'extrémité de sortie du second mélangeur (20) jusque dans la cuve (26); et

une pompe (34) montée dans la cuve (26) pour élever le contenu de la cuve (26) hors de celle-ci, cette pompe (34) comprenant des moyens (54) pour déchiqueter le contenu de la cuve pendant le pompage.

7. Appareil suivant la revendication 6, dans lequel les moyens (18) pour diriger la boue vers l'extrémité d'entrée du second mélangeur (20) comprennent une trémie (12) pour contenir une certaine quantité de la boue et une goulotte (14) pour amener la boue de la trémie (12) au second mélangeur (20).

8. Appareil suivant la revendication 6 ou 7, comprenant en outre une seconde pompe (30) montée dans la cuve (26) pour élever le contenu de la cuve (26) hors de celle-ci, la seconde pompe (30) comprenant des moyens (54) pour déchiqueter le contenu de la cuve pendant le pompage, et des moyens (61) pour ramener le flux sortant de la seconde pompe (30) dans la cuve (26).

9. Appareil suivant la revendication 6 ou 7, comprenant en outre:

une seconde pompe (30) montée dans la cuve (26) pour élever le contenu de la cuve hors de celle-ci, la seconde pompe (30) comprenant des moyens (54) pour déchiqueter le contenu de la cuve pendant le pompage;

un troisième mélangeur (22) comprenant une auge (134) comportant une extrémité d'entrée et une extrémité de sortie, au moins un arbre rotatif (140) monté longitudinalement au long de l'auge (134), plusieurs pales (164) montées sur l'arbre (140) et des moyens (158) pour faire tourner l'arbre (140);

des moyens (60) pour diriger le flux de sortie de la seconde pompe (30) vers l'extrémité d'entrée du troisième mélangeur (22); et

des moyens (68) pour diriger le flux sortant du troisième mélangeur (22) vers la cuve (26).

10. Appareil suivant la revendication 8 ou 9, comprenant en outre des moyens (65) pour diriger en alternance sélectivement le flux sortant de la seconde pompe (30) à nouveau vers la cuve (26).

11. Appareil suivant l'une quelconque des revendications 4 à 10, comprenant en outre des moyens (84) pour débiter l'agent de prise dans les moyens d'introduction d'agent de prise (90), des moyens (88) pour déterminer le débit d'apport de l'agent de prise aux moyens d'introduction (90) et des moyens (130) pour ajuster sélectivement ce débit d'apport.

12. Appareil suivant l'une quelconque des revendications 4 à 11, comprenant en outre des moyens (98) pour débiter le silicate dans les moyens d'introduction de silicate (102), des moyens (106) pour déterminer le débit d'apport du silicate aux moyens d'introduction (102) et des moyens (132) pour ajuster sélectivement ce débit d'apport.

13. Appareil suivant les revendications 11 et 12, comprenant en outre:

des moyens (126, 128) sensibles aux moyens de détermination du débit d'agent de prise (88) et aux moyens de détermination du débit de silicate (106) pour actionner les moyens d'ajustement du débit d'agent de prise (130) et les moyens d'ajustement du débit de silicate (132).

14. Appareil suivant l'une quelconque des revendications 4 à 13, comprenant en outre des moyens (122) pour collecter le flux sortant de l'extrémité de sortie du premier mélangeur (70) et amener ce flux en un endroit déterminé au préalable distant de ce mélangeur (70).

15. Appareil suivant la revendication 14, dans lequel les moyens de collecte et de direction du flux sortant (122) comprennent une pompe volumétrique.

16. Mélangeur (70) pour mélanger une boue véhiculant des déchets organiques avec un silicate de métal alcalin et un agent de prise, comprenant:

une cuve oblongue (134) comportant une extrémité d'entrée et une extrémité de sortie;

deux arbres rotatifs parallèles (140, 142) disposés longitudinalement au long de l'auge (134); et

des moyens (158, 162) pour imprimer un mouvement contrarotatif aux arbres (140, 142); et plusieurs pales (164) montées sur chacun des arbres (140, 142), caractérisé par:

le fait que chacune des pales (164) présente un bord d'attaque (166) définissant sensiblement une partie de la circonférence d'un cercle, un bord de fuite (168) définissant sensiblement une corde de ce cercle, la surface de chacune des pales étant inférieure à la moitié de la surface du cercle, chaque pale (164) étant montée par une extrémité sur l'un des arbres (140, 142) de façon que le bord de fuite (168) soit sensiblement tangent à ces arbres (140, 142);

des moyens (172) pour introduire la boue à l'extrémité d'entrée de l'auge (134); et

des moyens (182) pour évacuer le contenu de l'auge (134) à l'extrémité de sortie de celle-ci.

17. Mélangeur suivant la revendication 16, dans lequel les pales (164) sont montées sur les arbres (140, 142) à des écartements longitudinaux uniformes, chacune des pales successives (164) étant montée avec un décalage radial de 90° par rapport à la précédente des pales (164), de façon que les pales (164) définissent une hélice suivant la longueur de chacun des arbres (140, 142).

18. Mélangeur (70) suivant la revendication 16 ou 17, comprenant en outre une paroi d'extrémité (138) couvrant l'extrémité de sortie de l'auge (134), un orifice délimité dans la paroi d'extrémité pour permettre la sortie du contenu de l'auge (134) hors de celle-ci, un porte (182) pour couvrir l'orifice, la porte (182) étant positionnable pour couvrir une fraction choisie de l'orifice et un dispositif de verrouillage (184) pour retenir la porte (182) dans une position choisie.

19. Mélangeur (70) suivant les revendications 16, 17 ou 18, comprenant en outre:

des moyens (178) pour introduire l'agent de prise dans l'auge (134) en un point sensiblement adjacent à l'extrémité d'entrée; et

des moyens (180) pour introduire le silicate de métal alcalin dans l'auge (134) en un point au long de l'auge (134) entre le point d'introduction de l'agent de prise et l'extrémité de sortie.

20. Mélangeur (70) suivant l'une quelconque des revendications 16 à 19, comprenant en outre des moyens (174) pour introduire de l'eau dans l'auge (134) à l'extrémité d'entrée.

21. Mélangeur (70) suivant la revendication 20, comprenant en outre une paroi d'extrémité (136) couvrant l'extrémité d'entrée de l'auge (134) et les moyens d'introduction de l'eau (174) comprennent au moins un bec de pulvérisation monté au côté intérieur de la paroi d'extrémité (136) pour diriger l'eau dans l'auge (134).

22. Mélangeur (70) suivant la revendication 19 ou la revendication 19 en combinaison avec la revendication 20 ou 21, comprenant en outre une plaque de couverture (176) pour fermer la partie supérieure de l'auge (134) et les moyens d'introduction de l'agent de prise (178) comprennent un orifice défini dans cette plaque de couverture.

23. Mélangeur (70) suivant la revendication 22, dans lequel les moyens d'introduction du silicate comprennent au moins un bec de pulvérisation monté à la face inférieure de la plaque de couverture (176) pour diriger le silicate dans l'auge (134).

FIG-1

FIG-2

FIG-4

FIG-5

FIG-3

3